# EUROPÄISCHE PATENTSCHRIFT

(11) **EP 1 941 971 B1**
(45) Veröffentlichungstag und Bekanntmachung des Hinweises auf die Patenterteilung: **29.05.2013**
(21) Anmeldenummer: 08001184.4
(22) Anmeldetag: 22.03.2004
(51) Int. Cl.: B23Q 5/04, B23Q 11/12, F16C 33/66, F16N 7/12, B23Q 1/70

(54) **Spindel für eine Werkzeugmaschine mit einem Lagerelement mit einer kapillaren Zuleitung zur Zuführung von Schmierstoff**
Spindle for a machine tool with a bearing element with a capillary lead for supplying lubricant
Broche pour une machine-outil dotée d'un roulement ayant une alimentation capillaire destinée à l'introduction de lubrifiant

(43) Veröffentlichungstag der Anmeldung: 09.07.2008
(62) Teilanmeldung aus: 04006803.3
(73) Patentinhaber: Paul Müller GmbH & Co. KG Unternehmensbeteiligungen, 90411 Nürnberg (DE)
(72) Erfinder: Möller, Bernd, 91217 Hersbruck (DE)
(74) Vertreter: Lösch, Christoph Ludwig Klaus

(56) Entgegenhaltungen:
- EP-A- 0 854 314
- DE-A- 19 615 382
- US-A- 5 769 545
- US-B1- 6 357 922
- US-B1- 6 398 509

## Beschreibung

Die Erfindung betrifft eine Spindel für eine Werkzeugmaschine mit den Merkmalen des Oberbegriffs des Patentanspruchs 1 (siehe, z.B., US-6,398,509).

Als Stand der Technik ist bereits seit langem eine konventionelle Öl-Luft-Schmierung zur Zuführung von Öl als Schmierstoff zu den Lagerelementen von Spindeln für Werkzeugmaschinen bekannt. Bei einer derartigen Öl-Luft-Schmierung werden Ölmengen in bestimmten Intervallen impulsartig zugeführt, wobei die zuführbaren Ölmengen eine bestimmte Mindestmenge nicht unterschreiten können.

Der Erfindung liegt die Aufgabe zugrunde, eine Spindel für eine Werkzeugmaschine anzubieten, bei welcher ein Lagerelement auch mit Minimalmengen und gleichmäßig mit Schmierstoff versorgt werden kann.

Die Aufgabe wird für die Spindel durch die Merkmale des kennzeichnenden Teils des Patentanspruchs 1 in Verbindung mit den Merkmalen des Oberbegriffs gelöst. Vorteilhafte Ausführungsformen der Spindel werden in den Unteransprüchen 2 - 5 beschrieben.

Bei der erfindungsgemäßen Spindel wird Öl als Schmierstoff über mindestens eine kapillare Zuleitung mindestens einem Lagerelement zugeführt, Im Gegensatz zur bekannten Öl-Luft-Schmierung erfolgt der Transport des Öls nicht durch einen Luftstrom, sondern innerhalb der kapillaren Zuleitungen (kapillaren Schläuche oder Rohre), welche ständig mit ÖI gefüllt sind, so daß bei einer gesteigerten Zuführung ohne Verzögerung aufgrund vorhandener kapillarer Zuleitungen eine sofortige Reaktion und Ölzuführung am Bedarfsort, also am Ende der jeweiligen kapillaren Zuleitung, stattfindet. Es wird eine gleichmäßige Schmierung auch kleinster Mengen von insbesondere 10 - 100 µl / h (Mikroliter pro Stunde) ermöglicht.

Die kapillaren Zuleitungen besitzen einen Öffnungsdurchmesser von unter 2/10 mm, wobei Zuleitungen nach der üblichen Öl-Luft-Schmierung einen Öffnungsdurchmesser von typischerweise mindestens 2 mm besitzen.

Die kapillare Zuleitung ist in einer Ausnehmung (Bohrung) im Innen- oder Außenring des Lagerelements (z.B. eines Wälzlagers, Radialschrägkugellagers) aufgenommen und der Schmierstoff wird dem Wälzkontakt direkt ohne Luft als Transportmedium zugeführt. Damit kann im Gegensatz zur üblichen Öl-Luft-Schmierung das Lager nicht trockengeblasen werden.

Bei einer vorteilhaften Ausführungsform ist das Pumpenelement z.B. als Mikrozahnringpumpe oder als Mikroventil (z.B. in Form von Pieroaktoren) ausgebildet.

Das Pumpenelement ist in einer vorteilhaften Ausführungsform mit einem Verteilerelement verbunden, von dem mehrere kapillare Zuleitungen abgehen. Hierdurch kann eine zuverlässige Aufteilung des Schmierstoffs für mehrere Lagerelemente in der Spindel ermöglicht werden.

Der Strömungswiderstand einer Kapillare ist proportional zur 4. Potenz des Öffnungsdurchmessers (Gesetz von Hagen-Poiseuille). Über eine zusätzliche kapillare Rückleitung (Bypass) kann die zugeführte Ölmenge auf wenige Prozent des Nennvolumenstroms des Pumpenelements abgesenkt werden, da die vom Pumpenelement geförderte Ölmenge im Verhältnis der Strömungswiderstände von Zuführkapillaren und Bypasskapillaren geteilt wird. Dadurch kann das Pumpenelement in einem günstigen Arbeitsbereich arbeiten.

Die Kapillaren können als Teil der Ölzuführung oder als Kapillardrosseln in das Pumpenelement integriert (z.B. als mikrosystemtechnisch hergestellte Mäander o.ä.) realisiert werden.

In einer alternativen Ausführungsform kann das Pumpenelement z.B. durch entsprechende definierte Leckageströmungen oder definierte Spaltgeometrien so ausgeführt werden, daß die Eigenschaften des Bypass durch die Pumpencharakteristik selbst realisiert werden.

Durch ein Filterelement im Bypass kann die Sauberkeit des Schmierstoffs permanent im Nebenstrom erhöht werden. Die vom Pumpenelement geförderte Ölmenge wird im Verhältnis der Querschnitte von Zuführkapillare(n) und Bypasskapillare geteilt:

Nach einer vorteilhaften Ausführungsform können das Pumpenelement, das Verteilerelement und weitere Elemente platzsparend in das Gehäuse der Spindel integriert werden.

Die Erfindung ist anhand von Ausführungsbeispielen in den Zeichnungsfiguren weiter erläutert. Es zeigen:
- Fig. 1: eine schematische Gesamtansicht einer Spindel mit kapillaren Zuleitungen zur Zuführung von Schmierstoffen,
- Fig. 2: eine erste Ausführungsform von Lagerelementen in einer Spindel nach Fig. 1,
- Fig. 3: ein Regelkreislauf für eine bedarfsabhängige Schmierstoffdosierung.

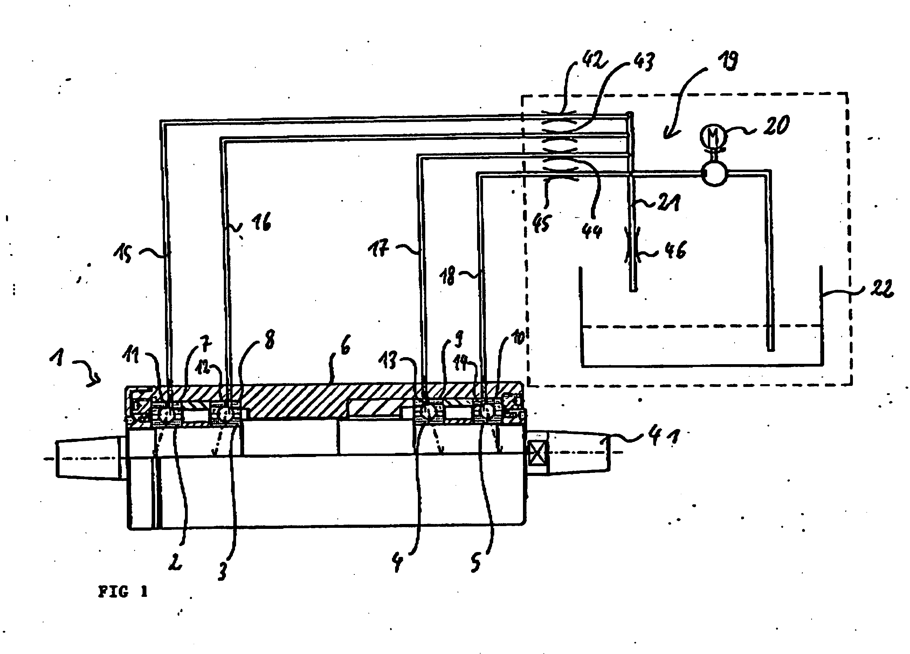

Fig. 1 zeigt eine schematisch dargestellte Spindel 1 für eine Werkzeugmaschine (Bearbeitungsspindel) mit einer in Lagerelementen 2, 3, 4 und 5 aufgenommenen Welle, die in einem Gehäuse 6 der Spindel 1 aufgenommen sind. Die Außenringe 7, 8, 9 und 10 der Lagerelemente 2, 3, 4 und 5 besitzen Ausnehmungen 11, 12, 13 und 14 (Bohrungen) zur Aufnahme von schematisch und damit vergrößert dargestellten kapillaren Zuleitungen 15, 16, 17 und 18, die z.B. als an sich bekannte kapillare Schläuche ausgebildet sind.

Insgesamt sind vier kapillare Zuleitungen 15, 16, 17 und 18 dargestellt, die über einen Verteiler 19 mit einem Pumpenelement 20 verbunden sind. Der Verteiler 19 kann ferner kapillare Drosseln 42, 43, 44 und 45 aufweisen und besitzt noch eine weitere kapillare Leitung 21, nämlichen einen Bypass, der auch eine kapillare Drossel 46 besitzen kann. Die kapillaren Drosseln können einzeln einstellbar sein und zur Dosierung der geförderten Mengenströme in den einzelnen kapillaren Zuleitungen und im Bypass dienen.

Das Pumpenelement 20 fördert Schmierstoff, z.B. Öl aus einem Vorratsbehälter 22 und führt den geförderten Schmierstoff den vier Kapillaren 15, 16, 17 und 18 zu. Ein Teil des Schmierstoffs wird durch die weitere kapillare Leitung 21 abgeleitet und ggf. gefiltert dem Vorratsbehälter 22 wieder zugeführt.

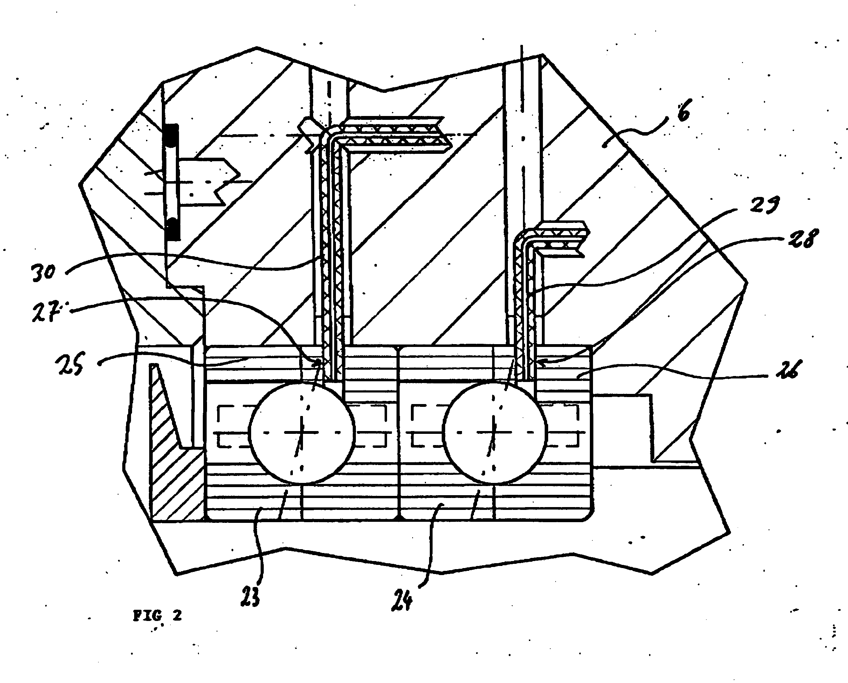

Fig. 2 zeigt eine Anordnungsmöglichkeit von Lagerelementen 23 und 24 direkt nebeneinander in einem Gehäuse 6 einer Spindel 1 nach Fig. 1. Die Außenringe 25 und 26 der Lagerelemente 23 und 24 besitzen Ausnehmungen 27 und 28 zur Aufnahme von schematisch dargestellten kapillaren Leitungen 29 und 30.

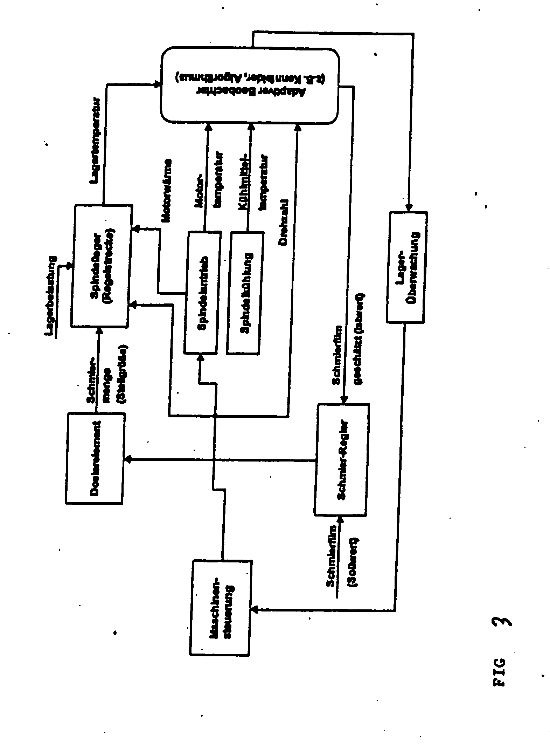

Aus Fig. 3 geht ein selbsterklärender Regelkreislauf hervor, der eine bedarfsabhängige Schmierungsregelung ermöglicht. Über Sensorelemente können Betriebsparameter der betriebenen Spindel 1 (z.B. Drehzahl, Motortemperatur, Kühlmitteltemperatur, Lagertemperatur) erfaßt werden und kann durch an sich bekannte Zusammenhänge die Stärke eines Schmierfilms in den vorhandenen Lagerelementen geschätzt werden. Falls hier ein Grenzwert unterschritten wird, kann dem Schmierregler über das Dosierelement eine Steigerung der Schmiermenge zugeführt werden, wodurch das Spindellager einen zusätzlichen Schmierfilm erhält und damit ausreichend geschmiert bleibt.

Das Dosieren der Schmierstoffmenge und damit die Veränderung der Aktivität des Pumpenelementes kann z.B. nach folgenden Strategien erfolgen:
- mit festen Werten über die gesamte Maschineneinschaltzeit in Abhängigkeit von Spindeltyp, Lagerausführung etc. (Vergleichbar mit bisherigen Schmierverfahren) oder
- gesteuert auf Basis von Kennfeldern z.B. Ölmenge = f (Drehzahl der Spindel) oder
- Regelung auf Basis einer direkten Schmierfilmmessung am Lager (z.Zt. noch kein zuverlässiges Verfahren verfügbar)
- Regelung auf Basis einer Schätzung der Dicke des Schmierfilms mit Hilfe einfach messbarer Grössen (Lagertemperatur etc.).

Sämtliche Strategien können einzeln oder kombiniert angewendet werden.

Als Regelgröße kann die geschätzte Dicke des Schmierfilms dienen, als Stellgröße die Schmierstoffmenge.

### BEZUGSZEICHEN

- 1: Spindel
- 2,3,4,5: Lagerelement
- 6: Gehäuse
- 7,8,9,10: Außenring
- 11,12,13,14: Ausnehmung
- 15,16,17,18: kapillare Zuleitung
- 19: Verteiler
- 20: Pumpenelement
- 21: kapillare Zuleitung
- 22: Vorratsbehälter
- 23,24: Lagerelement
- 25,26: Außenring
- 27,28: Ausnehmung
- 29,30: kapillare Zuleitung
- 41: Welle
- 42,43,44,45, 46: Drossel

## Patentansprüche

1. Spindel für eine Werkzeugmaschine, nämlich Motorspindel, mit einem Gehäuse zur Aufnahme eines Elektromotors, in welchem Lagerelemente aufgenommen sind, und mit einer von diesem antreibbaren in den Lagerelementen aufgenommenen Welle, insbesondere mit einer Werkzeugaufnahme für ein Werkzeug zur Werkstückbearbeitung, wobei mindestens ein Lagerelement (2, 3, 4, 5) eine kapillare Zuleitung (15, 16, 17, 18) zur Zuführung von Schmierstoff durch ein Pumpelement (20) aufweist, und die kapillare Zuleitung (15, 16, 17, 18) einen Öffnungsdurchmesser von unter 2/10 mm besitzt, **dadurch gekennzeichnet, daß** das Lagerelement (2, 3, 4, 5) eine Ausnehmung (11, 12, 13, 14) im Außen- oder Innenring zur Aufnahme der kapillaren Zuleitung (15, 16, 17, 18) aufweist,
die kapillare Zuleitung (15, 16, 17, 18) in der Ausnehmung (11, 12, 13, 14) aufgenommen ist, und
die kapillare Zuleitung (15, 16, 17, 18) als kapillarer Schlauch ausgebildet ist.

2. Spindel nach Anspruch 1,
**dadurch gekennzeichnet, daß** mehrere kapillare Zuleitungen (15, 16, 17, 18) vorgesehen sind, die über ein Verteilerelement (19) mit einem Pumpenelement (20) verbunden sind.

3. Spindel nach Anspruch 2,
**dadurch gekennzeichnet, daß** das Verteilerelement (19) eine weitere kapillare Leitung (21) als Bypass aufweist.

4. Spindel nach einem der vorhergehenden Ansprüche,
**dadurch gekennzeichnet, daß** die Spindel (1) zwei benachbart angeordnete Lagerelemente (2, 3, 4, 5) mit je einer kapillaren Zuleitung (15, 16, 17, 18) aufweist.

5. Spindel nach einem der vorhergehenden Ansprüche,
**dadurch gekennzeichnet, daß** die Spindel (1) zwei benachbart und beabstandet zueinander angeordnete Lagerelemente (2, 3, 4, 5) mit je einer kapillaren Zuleitung (15, 16, 17, 18) aufweist.

## Claims

1. Spindle for a machine tool, namely a motor spindle, having a housing for holding an electric motor, in which bearing elements are held, and having a shaft that can be driven by the electric motor and is held in the bearing elements, in particular with a tool mount for a tool for machining workpieces, wherein at least one bearing element (2, 3, 4, 5) has a capillary duct (15, 16, 17, 18) for the supply of lubricant by a pump element (20), and the capillary duct (15, 16, 17, 18) has an opening diameter of less than 2/10 mm,
**characterized in that**
the bearing element (2, 3, 4, 5) has a recess (11, 12, 13, 14) in the outer or inner ring for receiving the capillary duct (15, 16, 17, 18),
the capillary duct (15, 16, 17, 18) is held in the recess (11, 12, 13, 14), and
the capillary duct (15, 16, 17, 18) is designed as a capillary hose.

2. Spindle according to Claim 1, **characterized in that** a plurality of capillary ducts (15, 16, 17, 18) are provided and are connected to a pump element (20) via a manifold element (19).

3. Spindle according to Claim 2, **characterized in that** the manifold element (19) has a further capillary duct (21) as bypass.

4. Spindle according to one of the preceding claims, **characterized in that** the spindle (1) has two adjacent bearing elements (2, 3, 4, 5) each with a capillary duct (15, 16, 17, 18).

5. Spindle according to one of the preceding claims, **characterized in that** the spindle (1) has two adjacent, spaced-apart bearing elements (2, 3, 4, 5) with a capillary duct (15, 16, 17, 18) each.

## Revendications

1. Broche pour une machine-outil, à savoir une broche de moteur, comprenant un boîtier pour recevoir un moteur électrique, dans lequel boîtier sont reçus des éléments de palier, et comprenant un arbre pouvant être entraîné par celui-ci et reçu dans les éléments de palier, notamment avec un porte-outil pour un outil destiné à usiner des pièces, au moins un élément de palier (2, 3, 4, 5) présentant un conduit capillaire (15, 16, 17, 18) pour l'alimentation en lubrifiant par un élément de pompe (20), et le conduit capillaire (15, 16, 17, 18) possédant un diamètre d'ouverture inférieur à 2/10 mm,
**caractérisée en ce que** l'élément de palier (2, 3, 4, 5) présente un évidement (11, 12, 13, 14) dans la bague extérieure ou intérieure, pour recevoir le conduit capillaire (15, 16, 17, 18), le conduit capillaire (15, 16, 17, 18) étant reçu dans l'évidement (11, 12, 13, 14) et
le conduit capillaire (15, 16, 17, 18) étant réalisé sous forme de tube souple capillaire.

2. Broche selon la revendication 1,
**caractérisée en ce que** l'on prévoit plusieurs conduits capillaires (15, 16, 17, 18) qui sont connectés par le biais d'un élément distributeur (19) à un élément de pompe (20).

3. Broche selon la revendication 2,
**caractérisée en ce que** l'élément distributeur (19) présente un autre conduit capillaire (21) servant de dérivation.

4. Broche selon l'une quelconque des revendications précédentes,
**caractérisée en ce que** la broche (1) présente deux éléments de palier adjacents (2, 3, 4, 5) comprenant chacun un conduit capillaire (15, 16, 17, 18).

5. Broche selon l'une quelconque des revendications précédentes,
**caractérisée en ce que** la broche (1) présente deux éléments de palier adjacents et espacés l'un de l'autre (2, 3, 4, 5) avec un conduit capillaire (15, 16, 17, 18).
